# EUROPÄISCHE PATENTSCHRIFT

(11) **EP 2 567 766 B1**
(45) Veröffentlichungstag und Bekanntmachung des Hinweises auf die Patenterteilung: **14.12.2016**
(21) Anmeldenummer: 12190956.8
(22) Anmeldetag: 27.02.2009
(51) Int. Cl.: B22F 9/02, B22F 9/22, C22C 14/00, C22C 16/00, C01B 6/02, C01B 6/24, C01G 23/04, C01G 25/02, C22B 7/00, C22B 34/12, C22B 34/14, C22C 1/04, B22F 9/20, C22B 5/04, C22C 9/00, C22C 19/03, C22C 27/04

(54) **VERFAHREN ZUR HERSTELLUNG VON LEGIERUNGSPULVERN AUF DER BASIS VON TITAN LEGIERT MIT KUPFER**
Process for the preparation of alloy powders on the basis of titanium alloyed with copper
Procédé de fabrication de poudres d'alliage à base de titane alliés à cuivre

(30) Priorität: 28.02.2008 DE 102008000433
(43) Veröffentlichungstag der Anmeldung: 13.03.2013
(62) Teilanmeldung aus: 09714804.3
(73) Patentinhaber: Chemetall GmbH, 60487 Frankfurt am Main (DE)
(72) Erfinder: Karaca, Ahmet, 38640 Goslar (DE); Sermond, Bernd, 35614 Aßlar (DE); Wilfing, Gerhard, 35091 Cölbe (DE)
(74) Vertreter: Uppena, Franz

(56) Entgegenhaltungen:
- WO-A-2005/007906
- WO-A-2006/089222
- DE-C- 935 456
- FR-A- 835 468
- GB-A- 756 999
- GB-A- 813 999
- US-A- 2 512 455
- US-A- 5 364 587
- US-A1- 2004 022 722

## Beschreibung

Die Erfindung betrifft ein Verfahren zur Herstellung von Legierungspulvern auf der Basis von Titan legiert mit Cu.

Legierungspulver auf der Basis von Titan, Zirconium und Hafnium werden in der Pyroindustrie, bei der Herstellung von elektrischen Zündern, beispielsweise in Airbags und Zündverzögerungselementen, als Gettermaterialien in Vakuumröhren, in Lampen, in Vakuumapparaturen und in Gasreinigungsanlagen eingesetzt. Wegen der sehr hohen Anforderungen an die Zuverlässigkeit der oben genannten Produkte, beispielsweise Airbagzünder, ist es wünschenswert, die Legierungspulver von Charge zu Charge reproduzierbar mit gleichbleibenden Eigenschaften herzustellen, insbesondere in Bezug auf Brennzeit, Zündpunkt, mittlere Korngröße, Korngrößenverteilung und Oxidationswert. Außerdem ist es wünschenswert, die genannten Eigenschaften von vornherein auf bestimmte Werte einstellen zu können.

Die Herstellung der Legierungspulver kann durch ein kombiniertes Reduktions- und Legierungsverfahren erfolgen. Dazu wird das Oxid von Titan (TiO₂), Zirconium (ZrO₂) und/oder Hafnium (ZrO₂) zusammen mit den pulverförmigen Legierungselementen und einem Reduktionsmittel wie Calcium und/oder Calciumhydrid und/oder Magnesium und/oder Barium reduziert. Die Reduktion wird in einem geschlossenen, inertisierbaren Gefäß durchgeführt. Das oder die Reduktionsmittel werden in der Regel im Überschuss zugegeben. Nach der Reduktion werden die entstandenen Reduktionsmitteloxide durch Laugen mit Säure und nachfolgendem Waschen mit Wasser entfernt. Der Sauerstoffgehalt der erhaltenen Metalllegierungspulver liegt bei diesem Verfahren zwischen 1 und 5 %.

Alternativ können die Legierungspulver auf der Basis von Ti, Zr, Hf aus dem jeweiligen Metall durch Hydrieren und Dehydrieren gewonnen werden (HDH-Verfahren). Das jeweilige Metall wird hydriert und kann in dieser dann spröden Form zu Pulver der gewünschten Feinheit mechanisch zerkleinert werden. Um Schädigungen durch Aufnahme von Sauerstoff und Stickstoff zu vermeiden, muss zur Hydrierung hoch reiner Wasserstoff verwendet werden. Die Zerkleinerung des hydrierten Metalls auf die gewünschte Korngröße muss ebenfalls in einer reinen Schutzgasatmosphäre erfolgen, beispielsweise Helium oder Argon. Zur nachfolgenden Entfernung des Wasserstoffs und Bildung der Legierung wird das Titan-, Zirconium- oder Hafnium-Metallhydridpulver und das jeweilige zu legierende Metallhydridpulver oder Metallpulver im Vakuum bei erhöhter Temperatur zersetzt und gleichzeitig legiert.

Aus dem Dokument WO 2005/007906 A1 ist ein Verfahren zur Herstellung von Ti-, Zr- und/oder Hf-Metallpulvern bekannt, die hinsichtlich ihrer Brennzeit und ihres Zündpunktes zu reproduzierbaren Produkten führen. Diese Metallpulver werden erhalten in dem Pulver der Ausgangsoxide der genannten Metalle mit einer vorgegebenen Korngröße, BET-Oberfläche und dem Mindestgehalt des Oxides mit Kalzium- und/oder Magnesiumpulvern in einer Argon- oder Wasserstoffatmosphäre bei 800 bis 1400°C reduziert werden und das Metallpulver nach Laugung des Reaktionsproduktes mit Salzsäure sowie Waschen und Trocknen erhalten wird.

Das Dokument WO 2006/089222 A2 beschreibt Metall- und Metalllegierungspulver mit einer primären Partikelgröße von 5 bis 500 nm der Metalle Ti, Zr, Hf, V, Nb, Ta, Cr, Mo, W, Mn und der Seltenen Erden, die durch Reduktion der Oxide der genannten Elemente mit einer primären Partikelgröße in dem genannten Bereich mit einem reduzierenden Metall oder Metall-Precursor in einer inerten Atmosphäre. Die Aufarbeitung des Reaktionsproduktes verfolgt durch Waschen und Trocknen.

Aus dem Dokument US 2004/0022722 A1 ist weiterhin ein Verfahren zur Herstellung von Zirkonoxid bekannt, bei dem Zirkoniumoxvchlorid mit Ammonium-, Alkali- oder Erdalkalicarbonat oder -bikarbonat umgesetzt wird, so dass ein Zirkoniumoxid mit einem Chlorgehalt von maximal 300 ppm und einem Schwefelgehalt von maximal 30 ppm sowie einer durchschnittlichen Partikelgröße bis maximal 1,5 um erhalten wird.

Letztlich beschreibt das Dokument GB 756,999 ein Verfahren zur Herstellung von Metallleaierungspulvern bestehend aus mindestens einem der hochreaktiven Metallen Ti, Zr, Th und/oder U mit mindestens einem weiteren Metall durch Reduktion der Mischung mindestens eines Oxids der hochreaktiven Metalle mit einem reduzierenden Metall unter Zusatz eines Oxids oder Chlorids des reduzierenden Metalls in einer inerten Atmosphäre.

Von Nachteil der so hergestellten Legierungspulver ist unter anderem, dass diese keine reproduzierbare Brennzeit, keine reproduzierbare spezifische Oberfläche, keine reproduzierbare Korngrößenverteilung und keinen reproduzierbaren Zündpunkt aufweisen.

Aufgabe der Erfindung ist es, die Nachteile des Standes der Technik zu überwinden.

Die Brennzeit, ausgedrückt in s/50 cm, wird dabei wie folgt bestimmt: Die zu prüfende Substanz wird zunächst zur Beseitigung störender Agglomerate über zwei Siebe mit Maschenweiten von 250 µm und 45 µm abgesiebt. Gegebenenfalls kann die Probe dabei mit einem Pinsel vorsichtig bewegt werden. Zur Bestimmung der Brennzeit wird das Feingut verwendet, welches das 45 µm-Sieb passiert hat. 15 g der Probe werden lose auf eine folgend beschriebene Metallrinne gegeben, mit einer Pappkarte glatt gestrichen und der Überschuss durch Abstreifen entfernt. Die Metallrinne ist mit zwei Markierungen versehen, die in einem Abstand von 500 mm voneinander angebracht sind. Vor der Anfangsmarkierung wird zusätzlich eine etwa erbsengroße Substanzmenge aufgetragen und mit einem Brenner entzündet. Mit Hilfe einer Zeitaufnahme wird nun die Zeit ermittelt, die der Brennvorgang zum Durchlaufen der Strecke zwischen Anfangs- und Endmarkierung benötigt. Das Analysenergebnis der Brennzeit wird in der Dimension [s/50 cm] (Sekunde pro 50 cm) angegeben. Die Der Zündpunkt wird dabei wie folgt bestimmt: 10 g der zu prüfenden Substanz werden in einen vorgewärmten, so genannten "Zündblock" eingebracht und es wird die Temperatur gemessen, bei der Selbstzündung eintritt. Der Zündblock, bestehend aus einem eisernen Würfel mit einer Kantenlänge von 70 mm mit Material- und Thermoelementbohrungen (20 mm und 8 mm Durchmesser, jede Bohrung 35 mm tief, Abstand der Bohrungsmittelpunkte: 18 mm), wird nach Einsetzen des Thermometers oder Thermoelements in die dafür vorgesehene Bohrung mit einem Gebläsebrenner auf eine knapp unterhalb der Zündtemperatur liegende Temperatur vorgeheizt. Dieser Punkt wird durch eine Vorprobe ermittelt. In die Materialbohrung des vorgeheizten Zündblockes wird nun eine Spatelspitze (10 g) des zu untersuchenden Metallpulvers oder Hydrides eingetragen und der Block mit maximaler Gebläseflamme so lange erhitzt, bis das Pulver sich von selbst entzündet. Die dabei erreichte Temperatur ist der Zündpunkt.

Der mittlere Korndurchmesser wird mit einem "Fisher Sub-Sieve Size Korngrößenbestimmer" (im folgenden FSSS genannt) bestimmt. Eine Beschreibung dieser Messmethode findet sich in den "Instructions, Fisher Model 95 Sub-Sieve Sizer, Catalog No. 14-311, Part No. 14579 (Rev. C), published 01-94" von Fisher Scientific. Auf diese Messbeschreibung wird hier ausdrücklich Bezug genommen.

Gelöst wird die Aufgabe durch das Verfahren gemäß Anspruch 1.

Je nach Anteil des Legierungsmittels werden pulverförmige reine Metalllegierungspulver, teilweise hydrierte Metalllegierungspulver oder Metallhydridlegierungspulver erhalten. Je höher der Wasserstoffgehalt und je höher der Anteil des Legierungselements des Verfahrensproduktes ist, desto größer ist die Brennzeit, d.h. das Metalllegierungspulver brennt langsamer, und desto höher ist der Zündpunkt (Metalllegierungspulver zündet bei höheren Temperaturen) und jeweils umgekehrt.

Die Laugung des Reaktionsproduktes wird bevorzugt mit konzentrierter Salzsäure vorgenommen, die besonders bevorzugt in geringem Überschuss eingesetzt wird.

Die Erfindung wird im Folgenden an Hand eines Beispiels näher erläutert:
Beispiel 1: Herstellung von Titan/Kupfer-Legierungspulver, Zielzusammensetzung 75/25 (Ti/Cu)
31,2 kg TiH₂ (pulverförmiges Titanhydrid) mit folgenden Eigenschaften: TiH₂ min. 98,8 %, H min. 3,8 %, N max. 0,3 %, Mg max. 0,04 %, Fe max. 0,09 %, Cl max. 0,06 %, Ni max. 0,05 %, Si max. 0,15 %, C max. 0,03 %, mittlere Korngröße (FSSS) 3 bis 6 µm und
10,0 kg Cu (Kupfer in Form von Pulver) mit folgenden Eigenschaften: Cu min. 99,3 %, Schüttdichte 2,6 bis 2,8 kg/dm³, Siebanalyse 325 mesh 50 bis 65 %, Siebanalyse 150 mesh 10 bis 20 %
wurden zusammen in einem Mischfass 20 Minuten unter Argonatmosphäre gemischt. Dann wurde das Gemisch in Chargen von 5 kg auf Bleche aufgebracht. Die Bleche wurden in einen Ofen eingesetzt, der nachfolgend verschlossen und mit Argon bis zu einem Oberdruck von 100 hPa gefüllt wurde. Danach erfolgte die Evakuierung des Ofens. Der Reaktionsofen wurde in mehreren Schritten innerhalb von 6 Stunde unter Vakuum auf eine max. Temperatur von ca. 800 °C aufgeheizt. Die Reaktion läuft folgendermaßen ab:

   TiH₂ + Cu → TiCu + H₂

Nach ungefähr 4 h (abhängig vom Druck im Ofen) wurde die Ofenheizung abgeschaltet. Nachdem der Ofen auf Raumtemperatur abgekühlt war wurde die Masse herausgenommen und die Agglomerate aufgebrochen. Erhalten wurde eine TiCu-Legierung mit folgender Analyse: 72,4 % Ti, 25,3 % Cu, 1,4 % O, 0,02 % H, 0,05 % Al, 0,02 % Fe, 0,005 % Mg, Cd < 0,001 %, Zn < 0,002 %, Hg < 0,0002 %, Korngrößenverteilung d50: 17,7 µm %, mittlere Korngröße (FSSS): 9,4 µm.

## Patentansprüche

1. Verfahren zur Herstellung einer TiCu-Legierung mit folgender Analyse: 72,4 % Ti, 25,3 % Cu, 1,4 % O, 0,02 % H, 0,05 % Al, 0,02 % Fe, 0,005 % Mg, Cd < 0,001 %, Zn < 0,002 %, Hg < 0,0002 %, Korngrößenverteilung d₅₀: 17.7 µm, mittlere Korngröße (FSSS): 9,4 µm, **dadurch gekennzeichnet, dass** 31,2 kg TiH₂, das heißt pulverförmiges Titanhydrid, mit folgenden Eigenschaften: TiH₂ mindestens 98,8 %, H mindestens 3,8 %, N maximal 0,3 %, Mg maximal 0,04 %, Fe maximal 0,09 %, Cl maximal 0,06 %, Ni maximal 0,05 %, Si maximal 0,15 %, C maximal 0,03 %, mittlere Korngröße bestimmt nach FSSS 3 bis 6 µm und 10,0 kg Cu, das heißt Kupfer in Form von Pulver, mit folgenden Eigenschaften: Cu mindestens 99,3 %, Schüttdichte 2,6 bis 2,8 kg/dm³, Siebanalyse 325 mesh 50 bis 65 %, Siebanalyse 150 mesh 10 bis 20 % zusammen in einem Mischfass 20 Minuten unter Argonatmosphäre gemischt werden, das Gemisch in Chargen von 5 kg auf Bleche aufgebracht wird, die Bleche in einen Ofen eingesetzt werden, der nachfolgend verschlossen und mit Argon bis zu einem Oberdruck von 100 hPa gefüllt wird, danach die Evakuierung des Ofens erfolgt, wobei der Reaktionsofen in mehreren Schritten innerhalb von 6 Stunde unter Vakuum auf eine maximal Temperatur von 800 °C aufgeheizt wird und nach 4 h abhängig vom Druck im Ofen die Ofenheizung abgeschaltet wird sowie nachdem der Ofen auf Raumtemperatur abgekühlt ist, die Masse herausgenommen und die Agglomerate aufgebrochen werden.

## Claims

1. A process for producing a TiCu alloy with the following analysis: 72.4% Ti, 25.3% Cu, 1.4% O, 0.02% H, 0.05% A1, 0.02% Fe, 0.005% Mg, Cd < 0.001%, Zn < 0.002%, Hg < 0.0002%, particle size distribution d₅₀: 17.7 µm, average particle size (FSSS) : 9.4 µm, **characterised in that** 31.2 kg TiH₂, that is, powdered titanium hydride, having the following properties: TiH₂ at least 98.8%, H at least 3.8%, N maximally 0.3%, Mg maximally 0.04%, Fe maximally 0.09%, Cl maximally 0.06%, Ni maximally 0.05%, Si maximally 0.15%, C maximally 0.03%, average particle size determined according to FSSS 3 to 6 µm, and 10.0 kg Cu, that is, copper in powder form, having the following properties: Cu at least 99.3%, bulk density 2.6 to 2.8 kg/dm³, sieve analysis 325 mesh 50 to 65%, sieve analysis 150 mesh 10 to 20%, are mixed together in a mixing vessel for 20 minutes under an argon atmosphere, the mixture is placed on metal sheets in 5 kg batches, the metal sheets are inserted into an oven, which is subsequently sealed and filled with argon to an excess pressure of 100 hPa, the oven is then evacuated, wherein the reaction oven is heated under vacuum in several stages over 6 hours to a maximum temperature of 800°C, and after 4 hours, depending on the pressure in the oven, the oven heating is switched off, and once the oven has cooled to room temperature the mass is removed and the agglomerates are broken up.

## Revendications

1. Procédé de production d'un alliage titane/cuivre présentant la composition suivante : 72,4 % de titane, 25,3 % de cuivre, 1,4 % d'oxygène, 0,02 % d'hydrogène, 0,05 % d'aluminium, 0,02 % de fer, 0,005 % de magnésium, moins de 0,001 % de cadmium, moins de 0,002% de zinc, et moins de 0,0002 % de mercure, une répartition en taille des particules (diamètre d₅₀) de 17,7 µm et une taille moyenne des particules (FSSS) de 9,4 µm, **caractérisé en ce qu'**on prend :
- 31,2 kg d'hydrure de titane TiH₂ en poudre, qui présente les propriétés suivantes : au moins 98,8 % de TiH₂, au moins 3,8 % d'hydrogène, au maximum 0,3 % d'azote, au maximum 0,04 % de magnésium, au maximum 0,09 % de fer, au maximum 0,06 % de chlore, au maximum 0,05 % de nickel, au maximum 0,15 % de silicium et au maximum 0,03 % de carbone, et une taille moyenne de particules, déterminée par FSSS, de 3 à 6 µm,
- et 10,0 kg de cuivre Cu en poudre, qui présente les propriétés suivantes : au moins 99,3 % de Cu, une densité en vrac de 2,6 à 2,8 kg/dm³, une analyse au tamis de 325 mesh de 50 à 65 %, et une analyse au tamis de 150 mesh de 10 à 20 %,
que l'on mélange en les brassant ensemble pendant 20 minutes dans un mélangeur, sous atmosphère d'argon, on met le mélange sur des tôles par charges de 5 kg, on introduit ces tôles dans un four qui est ensuite fermé et rempli d'argon jusqu'à une surpression de 100 hPa, puis on fait le vide dans le four, et l'on chauffe le four de réaction sous vide, en plusieurs étapes et en l'espace de 6 heures, jusqu'à une température maximale de 800 °C, et après 4 heures de temps, en fonction de la pression régnant dans le four, on arrête de chauffer le four, et dès que le four est revenu à température ambiante, on en retire les masses et l'on pulvérise les agglomérats.
